# EUROPEAN PATENT APPLICATION

(11) **EP 1 972 469 A1**
(43) Date of publication of application: **24.09.2008**
(21) Application number: 07012046.4
(22) Date of filing: 20.06.2007
(51) Int. Cl.: B60C 23/04, B60R 25/00, H05K 9/00

(54) **Wireless-communication equipped vehicle**

(30) Priority: 23.03.2007 JP 2007076072
(71) Applicant: Pacific Industrial Co., Ltd., Ogaki-shi, Gifu-ken 503-8603 (JP)
(72) Inventor: Tsujita, Yasuhisa, Ogaki-shi Gifu-ken 503-8603 (JP)
(74) Representative: Kramer - Barske - Schmidtchen

(57) **Abstract**

A wireless-equipped vehicle (10) includes a vehicle body (11) made of a metal and including a ceiling (20), a main body (21) and a pillar (15-17) connecting the ceiling (20) and the main body (21), the pillar (15-17) having a side face, an interior wireless device (60) located in the vehicle body (11) to receive radio waves from outside the vehicle body (11), and a magnetic loss material (22-24) disposed on the side face of the pillar (15-17) to limit AC current conduction between the ceiling (20) and the main body (21).

## Description

This invention relates to a wireless-equipped vehicle including a metal body equipped with an interior wireless device which receives radio waves from outside the body.

Wireless-equipped vehicles of the above-mentioned type have conventionally been known, equipped with receivers such as radio, television, an electronic toll collection (ETC) vehicle-mounted unit, keyless entry system or tire monitor system as an interior wireless device. It is difficult to mount antennas of all these interior wireless devices on the vehicle exterior from the viewpoints of installation space and costs. In view of this problem, some of the interior wireless devices receive external radio waves via antennas disposed in the vehicle body. See JP-A-2005-119370 and JP-A-2002-4676, for example.

However, the intensity of radio waves from vehicle exterior is reduced by a shielding effect of the vehicle body when the radio waves arrive at the vehicle interior. As a result, there is a possibility that each interior wireless device having an antenna in the vehicle interior cannot receive radio waves stably.

Therefore, an object of the present invention is to provide a wireless-equipped vehicle in which an interior wireless device is stably capable of receiving radio waves from outside a vehicle body.

The present invention provides a wireless-equipped vehicle which comprises a vehicle body made of a metal and including a ceiling, a main body and a pillar connecting the ceiling and the main body, the pillar having a side face and an interior wireless device provided in the vehicle body to receive radio waves from outside the vehicle body, characterized by a magnetic loss material disposed on the side face of the pillar to limit AC current conduction between the ceiling and the main body.

In the above-described construction, a generation of magnetic field around the pillar is limited by the magnetic loss material. Accordingly, the AC current is prevented from flowing through the pillar between the ceiling and the main body. Consequently, since the shielding effect of the vehicle body is suppressed, the interior wireless device can stably receive the radio wave from outside the vehicle body.

In a preferred embodiment, the wireless-equipped vehicle further comprises a coating member containing the magnetic loss material and covering the pillar. As a result, the magnetic loss material can be prevented from protruding from the pillar. Furthermore, the coating member may be a sheet affixed to the pillar or paint applied to the pillar.

Furthermore, a block of the magnetic loss material may be provided between the pillar and an interior part covering the inside surface of the pillar. In this case, too, a generation of magnetic field around the pillar is limited by the magnetic loss material. Accordingly, the AC current conduction is limited between the ceiling and the main body through the pillar. The magnetic loss material preferably comprises a ferritic metal.

Additionally, the magnetic loss material may be disposed only on the inside surface of the pillar. Consequently, an exterior appearance of the wireless-equipped vehicle can be prevented from being spoiled by the magnetic loss material.

The invention will be described, merely by way of example, with reference to the accompanying drawings, in which:
FIG. 1 is a side view of a wireless-equipped vehicle in accordance with one embodiment of the invention;
FIG. 2 is a perspective view of the wireless-equipped vehicle;
FIG. 3 is a conceptual diagram of the wireless-equipped vehicle showing a tire pressure detector mounted on a wheel;
FIG. 4 is a block diagram showing electrical arrangement of the tire pressure detector and a tire monitor;
FIG. 5 is a sectional view of a pillar;
FIGS. 6A and 6B are conceptual views of a magnetic field penetrating through the wireless-equipped vehicle;
FIG. 7 is a sectional view of a pillar in accordance with a second embodiment; and
FIG. 8 is a sectional view of a pillar in accordance with a third embodiment.

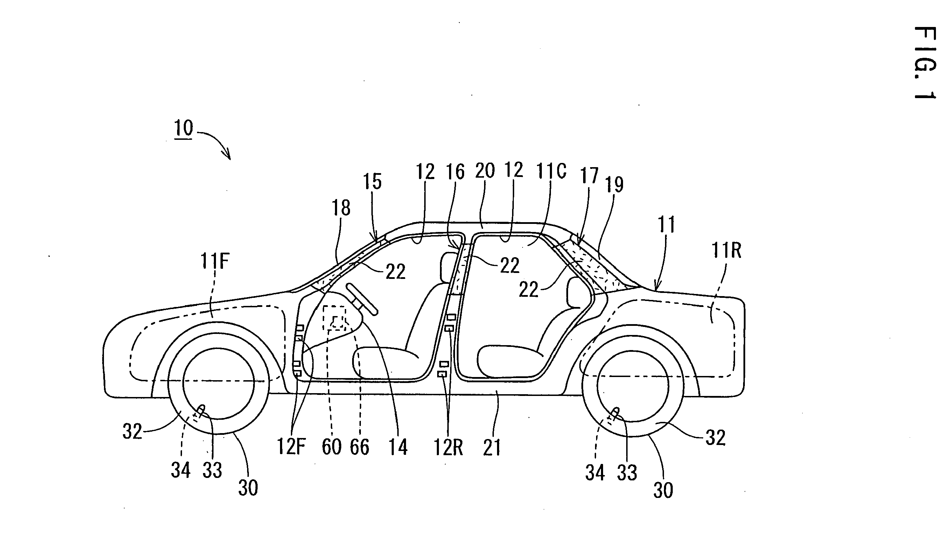

One embodiment of the present invention will be described with reference to FIGS. 1 to 6. Referring to FIG. 1, a wireless-equipped vehicle 10 of the embodiment is shown. The wireless-equipped vehicle 10 comprises a vehicle body 11 which is divided into an engine compartment 11F, a passenger compartment 11C and a trunk 11R. The top of the passenger compartment 11C is defined by a ceiling 20. Mounted between the ceiling 20 and a main body 21 are a pair of right and left front pillars 15, a pair of right and left center pillars 16 and a pair of right and left rear pillars 17. FIG. 1 shows only one of each pair.

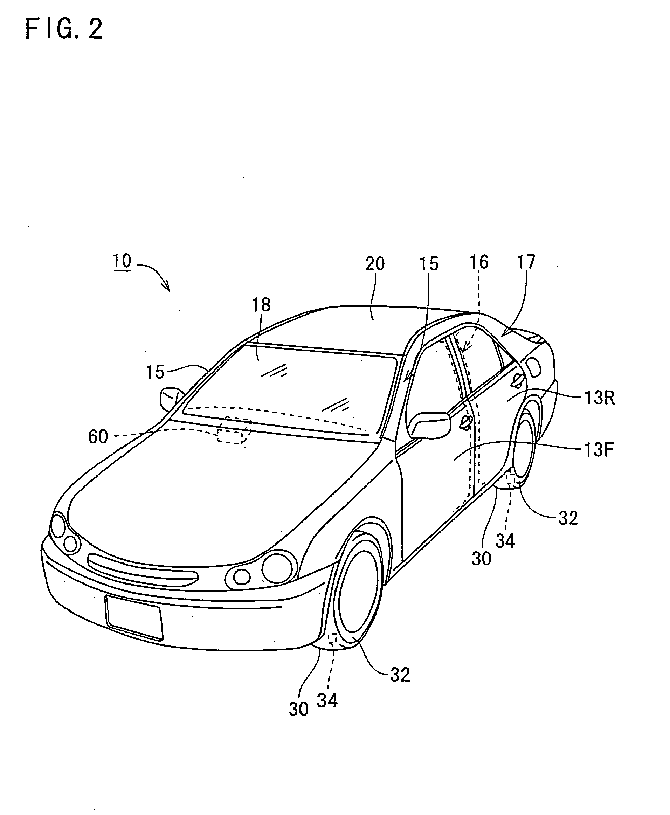

A front window glass 18 is mounted between the front pillars 15. A rear window glass 19 is mounted between the rear pillars 17. Two entrances 12 are defined between the front pillars 15 and the center pillars 16 and between the center pillars 16 and the rear pillars 17 respectively. Two front doors 13F (see FIG. 2) closing and opening the front entrances 12 are pivotally mounted on hinges 12F (see FIG. 1) which are provided on the main body 21 so as to be located below the front pillars 15 respectively. Two rear doors 13R (see FIG. 2) closing and opening the rear entrances 12 are pivotally mounted on hinges 12R (see FIG. 1) which are provided on vertically middle portions of the center pillars 16 respectively.

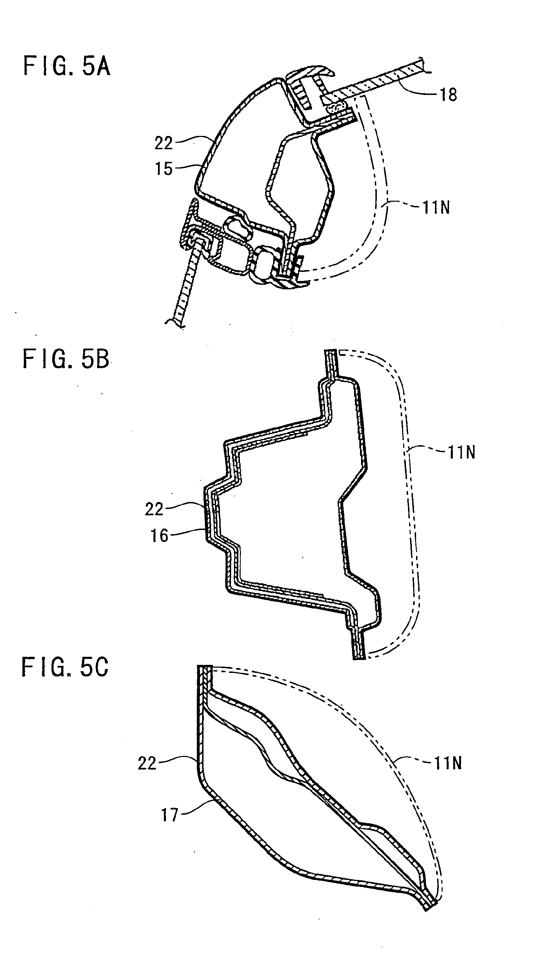

The doors 13F and 13R have front end faces from which cables (not shown) of electrical components (not shown) within the doors 13F and 13R are drawn to be connected to the main body 21 or front pillars 15 respectively. Furthermore, insulating cushion rubber is attached to overall outer edges of the doors 13F and 13R. The doors 13F and 13R are insulated by the cushion rubber at portions other than the cables and hinges 12F and 12R thereof from the vehicle body 11 (that is, the ceiling 20, main body 21 and pillars 15 to 17). The pillars 15 to 17 have inside faces covered by interior parts 11N respectively as shown in FIG. 5.

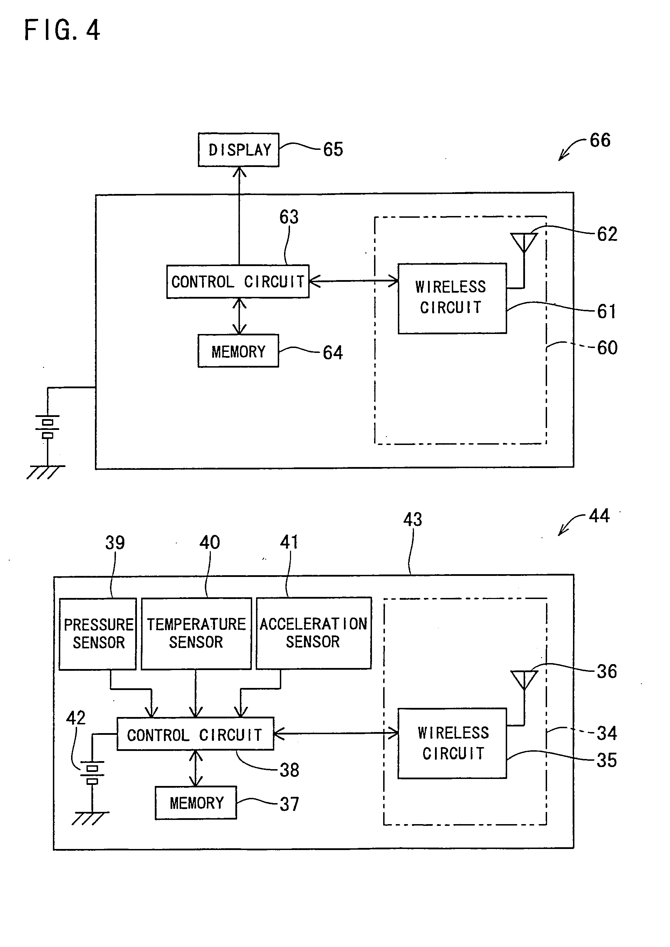

A dashboard 14 is provided on a front part of the passenger compartment 11C as shown in FIG. 1. A tire monitor device 66 is provided inside the dashboard 14. An interior wireless device 60 is provided as a part of the tire monitor device 66. The interior wireless device 60 comprises a wireless circuit 61 and an antenna 62 as shown in FIG. 4. The tire monitor device 66 includes a control circuit 63, a memory 64 and a display 65 in addition to the interior wireless device 60.

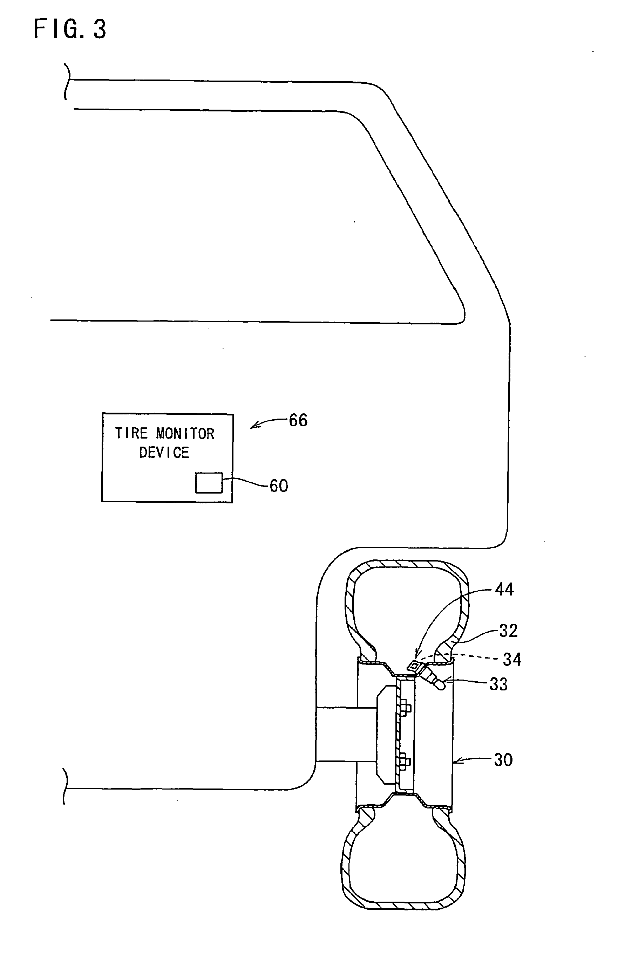

The vehicle 10 is provided with four wheels 30 for example, though only one wheel is shown in FIG. 3. Four tire pressure detectors 44 are mounted on the wheels 30 respectively. Exterior wireless devices 34 are provided which constitute a part of the tire pressure detectors 44 respectively. Each exterior wireless device 34 comprises a wireless circuit 35 and an antenna 36 as shown in FIG. 4. Each tire pressure detector 44 includes a memory 37, a control circuit 38, a pressure sensor 39, a temperature sensor 40, an acceleration sensor 41, a button cell 42 all of which are enclosed in a case 43 besides the exterior wireless device 34. The case 43 is fixed to a proximal end of a tire valve 33 disposed within a tire 32. The interior and exterior wireless devices 60 and 34 of the embodiment are arranged so as to carry out modulation and demodulation with use of carrier waves in a band of 300 MHz, for example.

An electrical conduction limiting sheet 22 (corresponding to a coating member or sheet in the invention) as shown in FIG. 5 is affixed to all of the front, center and rear pillars 15, 16 and 17 of the body 11 in order to carry out a good wireless communication between the tire monitor device 66 and the tire pressure detectors 44. The electrical conduction limiting sheet 22 is of composite materials of a polymer and a magnetic powder (ferritic metal powder, for example).

The electrical conduction limiting sheet 22 is affixed to the pillars 15 to 17 so as to cover an entire periphery of each of the pillars 15 to 17. Furthermore, as shown in FIG. 1, the electrical conduction limiting sheet 22 is affixed to each of the front and rear pillars 15 and 17 so as to extend over an entire vertical dimension thereof. The electrical conduction limiting sheet 22 affixed to each center pillar 16 extends from an upper end of each pillar 16 to the hinge 12R on which the door 13R is mounted. Additionally, the electrical conduction limiting sheet 22 is affixed to each of the pillars 15 to 17 so as to overlap a paint of each pillar and pigmentized as the same color as the paint.

The operation of the wireless-equipped vehicle 10 will now be described. When the acceleration sensor 41 detects rotation of the wheel 30, the control circuit 38 of each tire pressure detector 44 determines that the wireless-equipped vehicle 10 is in operation. In this case, the control circuit 38 executes a predetermined program stored on the memory 37. Pressure and temperature in each tire 32 are detected by the pressure sensor 39 and the temperature sensor 40 at a predetermined timing respectively. The control circuit 38 supplies to the exterior wireless device 34 the results of detection by the pressure sensor 39 and the temperature sensor 40 and an identification code stored on the memory 37. The detection results and identification code are modulated by the wireless circuit 35 of the exterior wireless device 34 into radio waves, which are delivered by the antenna 36.

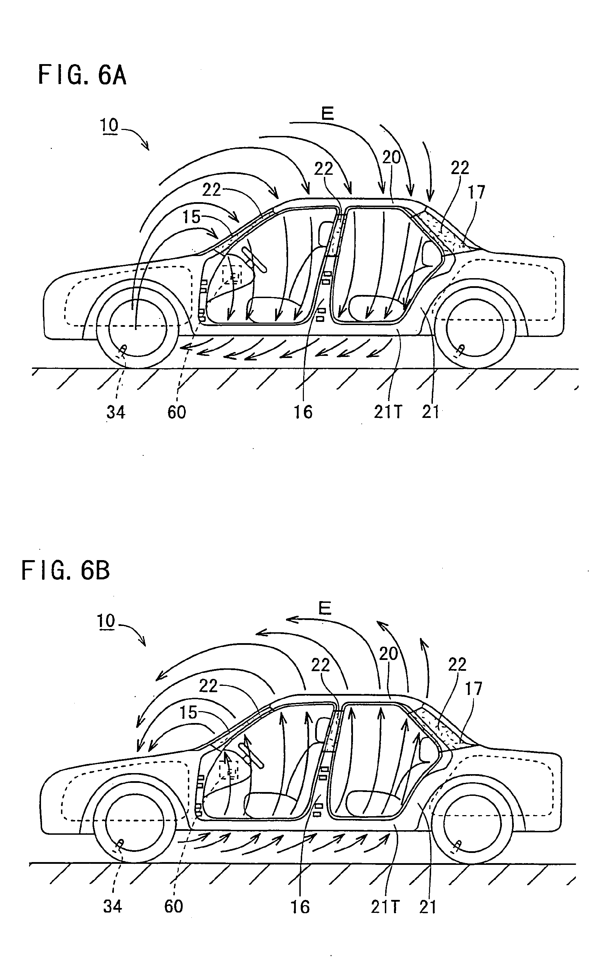

Upon output of the radio waves from the exterior wireless device 34, a part of electric field E contained in the radio wave penetrates vertically through the wireless-equipped vehicle 10 as shown in FIGS. 6A and 6B. Furthermore, the direction of the electric field E is reversed in a predetermined period (300 MHz, for example) . More specifically, as shown in FIG. 6A, when the electric field E is directed from the ceiling 20 to a bottom wall 21T side of the main body 21, the potential at the ceiling 20 is higher than the potential at the bottom wall 21T. Accordingly, current is caused to flow from the ceiling 20 through the pillars 15 to 17 to the main body 21.

However, each of the pillars 15 to 17 is covered by the electric conduction limiting sheet 22 comprised of the magnetic loss member in the wireless-equipped vehicle 10 of the embodiment. Accordingly, generation of magnetic filed is limited around each pillar, whereby the current conduction in each pillar is limited. As a result, the ceiling 20 and the bottom wall 21T of the main body 21 are prevented from being at the same potential instantaneously. The electric field E is also produced in the body 11. After the predetermined period, the direction of the electric field E produced from the exterior wireless device 34 is changed as shown by the change from FIG. 6A to FIG. 6B. Then, the potential of the ceiling 20 is lower than that of the bottom wall 21T. In this case, too, the current conduction is limited in each of the pillars 15 to 17 such that the electric field E is produced in the body 11.

As obvious from the foregoing, the electric field contained in the radio waves (electromagnetic waves) produced from the exterior wireless device 34 can also be produced in the vehicle body 11 since the shielding effect of the body 11 is limited. The interior wireless device 60 in the tire monitor device 66 receives the radio waves containing the aforesaid electric field E by the antenna 62 provided in the passenger compartment 11C. The wireless circuit 61 then demodulates the radio waves so that the results of detection of pressure and temperature and the identification code both contained in the radio waves are loaded into the control circuit 63. The control circuit 63 then compares the temperature and pressure of each tire 32 with a reference value stored on the memory 64, causing the display 65 to display presence of abnormal condition. Consequently, the information about pressure and temperature of each tire 32 can accurately be transmitted to the vehicle body 11 side.

According to the above-described wireless-equipped vehicle 10, the electrical conduction limiting sheet 22 is provided on the pillars 15 to 17 connecting the ceiling 20 and the main body 21 of the vehicle body 11. The electrical conduction limiting sheet 22 limits the conduction of AC current between the ceiling 20 and the main body 21. Accordingly, since the shielding effect of the body 11 against radio waves is suppressed, the interior wireless device 60 can stably receive the radio waves from outside the body 11. Consequently, when the exterior wireless device 34 transmits information about pressure and temperature of each tire 32 on radio waves, the information can accurately be transmitted to the interior wireless device 60 in the body 11 side. Furthermore, since the magnetic loss material is contained in the electrical conduction limiting sheet 22, the material can be prevented from protruding from each of the pillars 15 to 17, whereupon the visual quality of the vehicle can be improved.

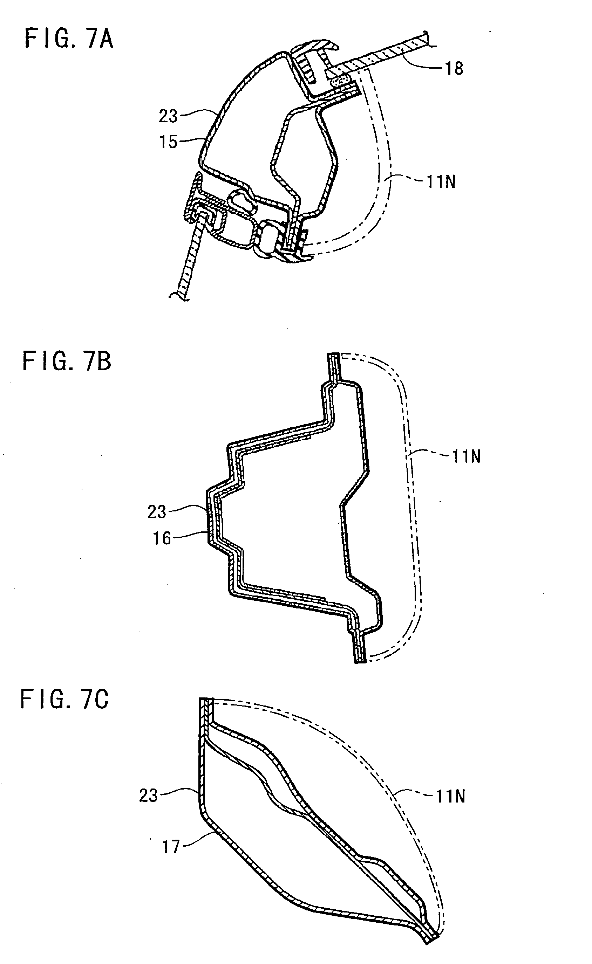

FIG. 7 illustrates a second embodiment of the invention. In the second embodiment, an electrical conduction limiting paint 23 (corresponding to the coating member and a paint containing a magnetic loss material in the invention) is applied to all the pillars 15 to 17, instead of the electrical conduction limiting sheet 22 in the first embodiment. The electrical conduction limiting paint 23 contains the magnetic loss material and accordingly surrounds each pillar in the same manner as the electrical conduction limiting sheet 22. As a result, the electrical conduction limiting paint 23 can achieve the same effect as in the first embodiment. Furthermore, since the electrical conduction limiting paint 23 can be used instead of the conventional paint, conventional pillars can readily be changed to new ones with the electrical conduction limiting paint 23.

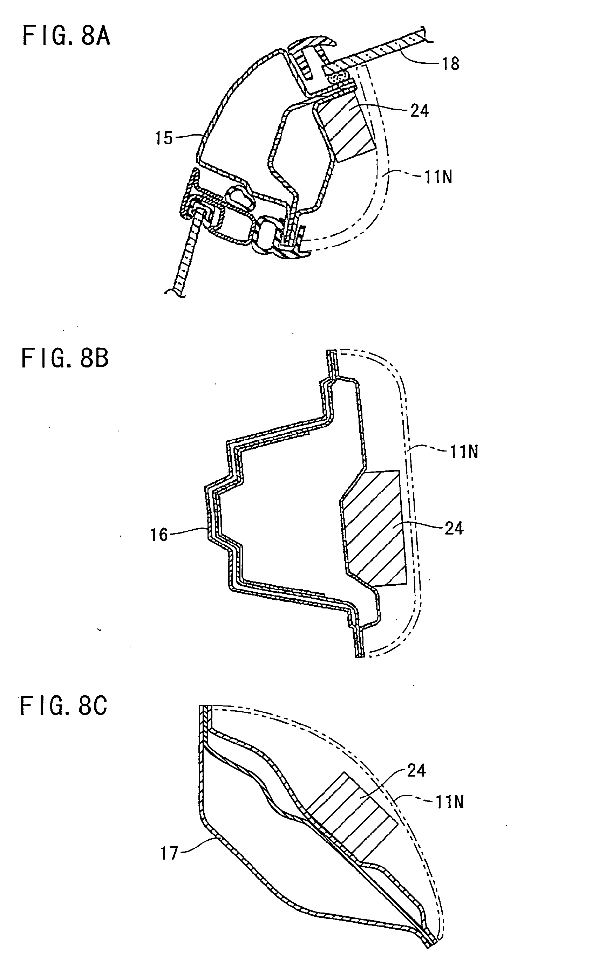

FIG. 8 illustrates a third embodiment of the invention. In the third embodiment, an electrical conduction limiting block 24 (corresponding to a block in the invention) is provided between each of the pillars 15 to 17 and an interior part 11N covering the inner face of each pillar instead of the electrical conduction limiting sheet 22 in the first embodiment. The electrical conduction limiting block 24 is a mass of magnetic loss material (ferritic metal, for example) and confronts the inner surface of each of the pillars 15 to 17.

The above-described construction also limits the production of magnetic field around the pillars 15 to 17. Accordingly, the third embodiment can achieve the same effect as the first embodiment. Furthermore, since the electrical conduction limiting block 24 is only mounted on the conventional wireless-equipped vehicle 10, conventional pillars can readily be changed. Additionally, since the electrical conduction limiting block 24 is disposed between each of the pillars 15 to 17 and the interior part 11N so as to be hidden, the interior appearance of the wireless-equipped vehicle 10 can be prevented form being spoiled.

The invention should not be limited to the foregoing embodiments. For example, the following embodiments encompass the technical scope of the present invention. Furthermore, the following embodiments may be modified without departing from the gist of the invention.

The ceiling 20 and the main body 21 are connected to each other by the front, center and rear pillars 15 to 17 in the wireless-equipped vehicle 10 of the first embodiment. However, the wireless-equipped vehicle 10 may have any number of pillars only if the magnetic loss material (electrical conduction limiting sheet 22, electrical conduction limiting paint 23 or electrical conduction limiting block 24, for example) in accordance with the invention is provided on the pillars.

All the pillars 15 to 17 of the wireless-equipped vehicle 10 of the first to third embodiments are provided with the magnetic loss material (electrical conduction limiting sheet 22 or electrical conduction limiting paint 23, for example). However, a part of the pillars may be provided with the magnetic loss material. Even in this case, the shielding effect of the body 11 can be suppressed as compared with the case where the pillars are provided with no magnetic loss material.

The magnetic loss material (electrical conduction limiting sheet 22, electrical conduction limiting paint 23 or electrical conduction limiting block 24, for example) may be disposed on a part of vertical dimension of each pillar or an overall vertical dimension of each pillar. Alternatively, the magnetic loss material may be disposed on a plurality of separate parts of vertical dimension of each pillar.

The magnetic loss material (electrical conduction limiting sheet 22 or electrical conduction limiting paint 23, for example) may be disposed on a part of the periphery of each pillar or an overall periphery of each pillar. Alternatively, the magnetic loss material may be disposed on a plurality of separate parts of periphery of each pillar.

The electrical conduction limiting block 24 is a mass of ferritic metal which is a magnetic loss material in the third embodiment. However, the block in the present invention may be a mass of resin or rubber each containing the magnetic loss material, for example.

The interior wireless device 60 is provided as the tire monitor device 66 in the first embodiment. However, the invention may be applied to the wireless-equipped vehicle 10 which is provided with an interior wireless device such as radio, television, an electronic toll collection (ETC) vehicle-mounted unit or keyless entry system.

It is explicitly stated that all features disclosed in the description and/or the claims are intended to be disclosed separately and independently from each other for the purpose of original disclosure as well as for the purpose of restricting the claimed invention dependent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A wireless-equipped vehicle which comprises a vehicle body (11) made of a metal and including a ceiling (20), a main body (21) and a pillar (15-17) connecting the ceiling (20) and the main body (21), the pillar having a side face and an interior wireless device (60) provided in the vehicle body (11) to receive radio waves from outside the vehicle body (11), **characterized by** a magnetic loss material (22-24) disposed on the side face of the pillar (15-17) to limit AC current conduction between the ceiling (20) and the main body (21).

2. The wireless-equipped vehicle according to claim 1, further **characterized by** a coating member (22, 23) containing the magnetic loss material (22, 23) and covering the pillar (15 to 17) .

3. The wireless-equipped vehicle according to claim 2, **characterized in that** the coating member (22) comprises a sheet (22) affixed to the pillar (15-17).

4. The wireless-equipped vehicle according to claim 2, **characterized in that** the coating member (23) comprises paint (23) applied to the pillar (15-17).

5. The wireless-equipped vehicle according to claim 1, **characterized in that** the pillar (15-17) includes an inside surface covered with an interior part (11N), and the magnetic loss material (24) comprises a block (24) provided between the pillar (15-17) and the interior part (11N).

6. The wireless-equipped vehicle according to any one of claims 1 to 5, **characterized in that** the magnetic loss material (22-24) comprises a ferritic metal.

7. The wireless-equipped vehicle according to any one of claims 1 to 6, **characterized in that** the pillar (15-17) includes an inside surface, and the magnetic loss material (22-24) is disposed only on the inside surface of the pillar (15-17).

8. The wireless-equipped vehicle according to any one of claims 1 to 7, further **characterized by** at least one wheel (30) and one tire (32) mounted on the wheel (30) and an exterior wireless device (34) mounted on the wheel (30) for detecting pressure in the tire (32) and supplying a result of detection as a radio wave, and in that the interior wireless device (60) receives the radio wave supplied by the exterior wireless device (34).
